# EUROPÄISCHE PATENTANMELDUNG

(11) **EP 1 232 822 A1**
(43) Veröffentlichungstag der Anmeldung: **21.08.2002**
(21) Anmeldenummer: 02003311.4
(22) Anmeldetag: 13.02.2002
(51) Int. Cl.: B23D 79/02

(54) **Vorrichtung zum thermischen Entgraten von Werkstücken**

(30) Priorität: 15.02.2001 DE 10106967
(71) Anmelder: ROBERT BOSCH GMBH, 70442 Stuttgart (DE)
(72) Erfinder: Conrad, Hans-Jürgen, 71277 Rutesheim (DE); Kaercher, Jochen, 70378 Stuttgart (DE)

(57) **Zusammenfassung**

Die Erfindung betrifft eine Vorrichtung zum thermischen Entgraten von Werkstücken mit einer verschließbaren Entgratungskammer (1), in welche die zu entgratenden Werkstücke (3) einbringbar sind und die mit einer Prozessgasquelle verbindbar und mit einer Zündeinrichtung (17, 18) zum Zünden einer eingebrachten Prozessgasfüllung versehen ist. Um die bei herkömmlichen Vorrichtungen vorhandenen Mängel zu beseitigen, ist erfindungsgemäß vorgesehen, dass der Entgratungskammer (1) ein Schnellentlüftungsventil (21) zugeordnet ist, über das der in der Entgratungskammer (1) vorhandene Überdruck abströmen kann.

## Beschreibung

### Stand der Technik

Die Erfindung geht aus von einer Vorrichtung zum thermischen Entgraten von Werkstücken nach der Gattung des Patentanspruchs 1.

Bei Anlagen zum thermischen Entgraten von Werkstücken erfolgt ein ungezielter Abtrag, bei dem das gesamte Werkstück einem Hitzeschock ausgesetzt wird. Bevorzugt abgetragen werden Ecken und Kanten, da diese Stellen bei großer Oberfläche und kleinem Volumen besonders viel Wärme aufnehmen und somit oxidiert bzw. verbrannt werden. Der Hitzeschock wird durch das Abbrennen eines Prozessgases, das vorzugsweise aus einem Brenngas-Sauerstoffgemisch besteht, erzeugt, wobei Wasserstoff oder Erdgas bzw. Methan als Brenngas verwendet werden.

Beim Entgratungsvorgang werden ein oder mehrere Werkstücke in eine Entgratungskammer eingebracht, die mittels eines Schließtellers verschließbar ist. In die verschlossene Entgratungskammer wird dann das Prozessgas eingebracht. Da die bereits mit Luft gefüllte Entgratungskammer zusätzlich mit dem Prozessgas beaufschlagt wird, entsteht in der Entgratungskammer ein relativ hoher Überdruck, der je nach zu entgratendem Material bis 50 bar betragen kann.

Nach dem Zünden des Prozessgases oder auch bei Störfällen, z. B. wenn keine Zündung erfolgt ist, muss der Überdruck aus der Entgratungskammer abgelassen werden. Dazu wird die Zuhaltekraft, mit welcher der Schließteller auf die Entgratungskammer gedrückt wird, auf null reduziert, so dass der Überdruck in der Entgratungskammer sowie Entgratungsoxide und Entgratungsrückstände über die zwischen Entgratungskammer und Schließteller vorgesehene Dichtung entweichen können.

Dies führt zu einer starken Verschmutzung im gesamten Schließteller- und Entgratungskammerbereich. Auch können nicht alle Abgase von der vorhandenen Absaugung aufgenommen werden, da der Überdruck im wesentlichen unkontrolliert aus der Entgratungskammer entweicht. Durch Entgratungsoxide und Entgratungsrückstände kommt es darüber hinaus zu einem abrasiven Verschleiß an der zwischen der Entgratungskammer und dem Schließteller vorhandenen Dichtung. Dies führt zu einer geringen Maschinenverfügbarkeit und zu hohen Wartungskosten. Außerdem ergeben sich große Taktzeiten, da die Druckentlastung des Schließtellers wegen des hohen Überdrucks nur langsam vonstatten gehen kann.

### Vorteile der Erfindung

Die erfindungsgemäße Vorrichtung mit den Merkmalen des Patentanspruchs 1 erbringt demgegenüber zunächst den Vorteil, dass eine Verschmutzung am Schließteller und im Entgratungskammerbereich entfällt, da der Überdruck direkt über das Schnellentlüftungsventil abgelassen und dann gezielt von einer Absaugung aufgenommen werden kann, ohne dass irgendwelche Rückstände in die Umgebungsluft gelangen können. Somit können Entgratungsoxide und Entgratungsrückstände z. B. über einen der Absaugung zugeordneten Filter exakt separiert werden. Da über die zwischen Entgratungskammer und Schließteller vorgesehehe Dichtung keine Rückstände mehr austreten, wird weiterhin der Verschleiß an der Dichtung minimiert. Dadurch ergeben sich eine höhere Maschinenverfügbarkeit und geringere Wartungskosten. Außerdem können die Taktzeiten verkürzt werden, da die Entlüftung über das Schnellentlüftungsventil erheblich schneller vor sich geht als beim Stand der Technik.

Durch die in den Unteransprüchen aufgeführten Maßnahmen sind vorteilhafte Weiterbildungen und Verbesserungen der im Hauptanspruch angegebenen Vorrichtung möglich.

Das Schnellentlüftungsventil kann direkt an die Entgratungskammer angeschlossen sein. Wenn das Prozessgas aus mehreren Komponenten besteht, die in einem Mischblock zusammengeführt werden, kann nach einer anderen Ausführungsvariante das Schnellentlüftungsventil auch im Bereich des Mischblocks an einer zentralen Gaszuführung für das Prozessgas oder an einer in der Entgratungskammer vorgesehenen Bohrung angeordnet sein. In beiden Fällen ergibt sich eine äußerst kompakte Ausgestaltung der gesamten Vorrichtung, so dass der Aufwand zum Herstellen der verschiedenen Verbindungen und Anschlüsse minimiert werden kann.

Besonders einfach gestaltet sich der Anschluss des Schnellentlüftungsventils, wenn die zentrale Gaszuleitung und/oder die Bohrung über ein T-Stück angezapft sind, an welches das Schnellentlüftungsventil angeschlossen ist.

Das Schnellentlüftungsventil ist vorzugsweise über einen Hydraulikzylinder ansteuerbar. Dadurch ist eine sichere, aber trotzdem schnelle gedrosselte Entlüftung der Entgratungskammer gewährleistet.

Das Schnellentlüftungsventil umfasst nach einer bevorzugten Weiterbildung vorzugsweise einen Ventilstößel, der auf einen Ventilsitz gepresst wird, der einen aus einem elastischen Material, z. B. Teflon, oder einem plastischen Material bestehenden Dichtring aufweist. Dadurch kann eine gute Standzeit des Schnellentlüftungsventils sichergestellt werden.

Je nach Ausgestaltungsvariante kann der Ventilsitz ebene oder auch schräge Kontaktflächen und der Ventilstößel entsprechende Kontaktflächen aufweisen. Dies hängt von den jeweiligen Gegebenheiten ab.

Damit auch bei hohen Anpressdrücken eine Verdrängerfunktion ausgeübt und eine Spaltextrusion verhindert wird, ist vorzugsweise vorgesehen, dass der Dichtring wenigstens auf der vom Ventilstößel beaufschlagten Seite radial innen und außen von geschlossenen, umlaufenden, metallischen Dichtringteilen eingefasst ist.

Diese Dichtringteile erstrecken sich vorzugsweise nur über einen Teil der Dichtringhöhe, um ein Verklemmen dieser Dichtringteile in ihren Aufnahmen zu vermeiden.

Nach einer bevorzugten Ausführungsform kann der Ventilstößel pilzförmig ausgebildet sein. Dies hat den Vorteil, dass durch den in der Entgratungskammer herrschenden Überdruck der Pilz noch stärker auf den Ventilsitz gepresst wird, so dass eine geringere Ausgangszuhaltekraft notwendig ist.

An das Schnellentlüftungsventil ist gemäß einer bevorzugten Weiterbildung eine Rohrleitung angeschlossen, über die der Druck abströmen kann. Somit kann sichergestellt werden, dass tatsächlich alle abströmenden Abgase und Oxide in die Absaugung gelangen.

Nach einer bevorzugten Ausgestaltung weist der Ventilstößel einen mittig angeordneten zylindrischen Zapfen auf, der vorzugsweise nach vorne abgerundet ist. Diese Zapfen dient als Hitzeschild und schützt den Ventilsitz von zu hohen Temperaturen.

Wenn nach einer bevorzugten Weiterbildung der Mischblock direkt an der Entgratungskammer angeordnet ist, kann auf komplizierte und lange Zuleitungen verzichtet werden. Auch hierdurch lassen sich Kosten einsparen und ein kompakterer Aufbau der gesamten Vorrichtung erreichen.

### Zeichnung

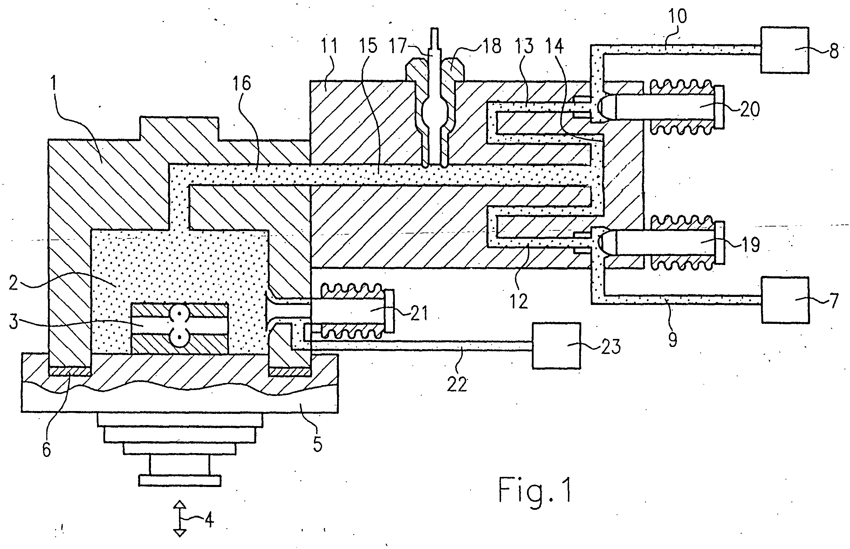

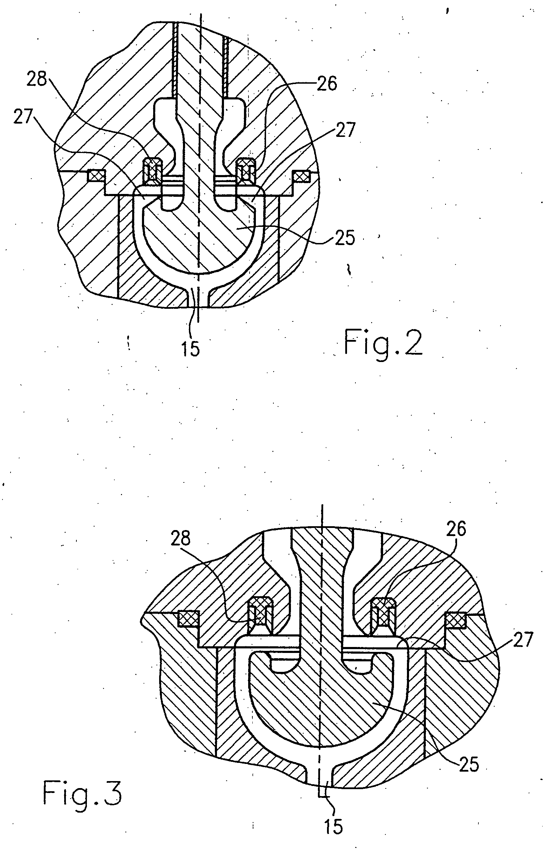

Ein Ausführungsbeispiel der Erfindung ist in den Zeichnungen dargestellt und in der nachfolgenden Beschreibung unter Angabe weiterer Vorteile und Merkmale näher erläutert. Die Figur 1 zeigt eine schematisch dargestellte Vorrichtung zum thermischen Entgraten von Werkstücken mit den zum Verständnis der Erfindung notwendigen Bauelementen. Die Figuren 2 bis 5 zeigen in vergrößerter Darstellung unterschiedliche Ausführungsvarianten des Ventils, das bei der Vorrichtung nach Figur 1 Verwendung finden kann, und in Figur 6 ist in einer vergrößerten Ansicht die Ausgestaltung eines Ventilsitzes dargestellt.

### Beschreibung des Ausführungsbeispiels

In der Figur 1 ist mit 1 eine Entgratungskammer bezeichnet, in deren Brennraum 2 sich ein zu entgratendes Werkstück 3 befindet. Das Werkstück 3 ruht auf einem in Richtung des Doppelpfeils 4 bewegbaren Schließteller 5, welcher vor dem Füllen des Brennraums 2 mit einem Brenngas-Sauerstoffgemisch und Zünden desselben an die Stirnfläche der Entgratungskammer 1 angepresst wird. Zwischen dem Schließteller 5 und der Stirnfläche der Entgratungskammer 1 ist eine Dichtung 6 angeordnet.

Die Gaskomponenten des Brenngas-Sauerstoffgemisches werden aus je einem Vorratsbehälter 7 für Brenngas bzw. 8 für Sauerstoff über druckfeste Gaszuführleitungen 9 bzw. 10 in einen Mischblock 11 eingebracht. Dieser besteht aus einem massiven Metallblock, in dem Gaszuführungsbohrungen 12, 13, eine Mischraumbohrung 14 und eine zentrale Gaszuführung 15 ausgebildet sind. Durch die zentrale Gaszuführung 15 und eine weitere, in der Entgratungskammer 1 ausgebildete Bohrung 16 strömt das Gasgemisch in den Brennraum 2 der Entgratungskammer 1. Zum Zünden des Gasgemisches dient eine in die zentrale Gaszuführung 15 hineinragende Zündkerze 17, die in einem Einsatz 18 des Mischblocks 11 sitzt. Zwischen den Gaszuführleitungen 9, 10 und den Gaszuführungsbohrungen 12, 13 ist im Mischblock 11 je ein Ventil 19 bzw. 20 angeordnet. Diese Ventile 19 bzw. 20 werden bei Beginn des Gaseinlasses durch Federkraft geöffnet und nach Abschluss des Gaseinlasses wieder geschlossen. Das Schließen der Ventile 19, 20 gegen Federwirkung erfolgt vorzugsweise durch Hydraulikkraft.

Die Gaszuführleitungen 9 und 10 für Brenngas und Sauerstoff können, ausgehend von den Vorratsbehältern 7 und 8, diverse nicht dargestellte Armaturen, wie Abstellventile, Druckreduzierventile, Dosiervehtile, Durchflussmengenmesser und Absperrventile enthalten.

Der Entgratungskammer 1 ist ein Schnellentlüftungsventil 21 zugeordnet. Dieses kann - wie in Figur 1 gezeigt- z. B. über eine Bohrung direkt an die Entgratungskammer 1 angeschlossen sein. Über dieses Schnellentlüftungsventil 21 kann der in der Entgratungskammer 1 befindliche Überdruck und ggf. Entgratungsrückstände entweder nach erfolgtem Bearbeitungsvorgang oder bei einem Störfall über eine Rohrleitung 22 zu einer Absaugung 23 o. dgl. abgelassen werden.

Das Schnellentlüftungsventil 21 wird so lange geschlossen gehalten, bis der Entgratungsprozess nach erfolgter Zündung stattgefunden hat. Nach einer kurzen Beruhigungsphase öffnet ein Hydraulikzylinder das Schnellentlüftungsventil 21 und lässt den Überdruck direkt über die angeschlossene Rohrleitung 22 abströmen, welche in der Absaugung 23 o. dgl. mündet. Nach dem. Druckabbau kann die Entgratungskammer 1 sofort geöffnet werden, indem der Schließteller 5 im Eilgang zurückgefahren wird.

Das Schließen des Schnellentlüftungsventils 21 erfolgt vorzugsweise mittels Federwirkung, während das Öffnen des Schnellentlüftungsventils 21 vorzugsweise durch Hydraulikkraft entgegen der Federwirkung erfolgt. Der dazu vorgesehene Hydraulikzylinder ist in seinen Abmessungen und im Hydraulikdruck den Reaktionskräften in der Entgratungskammer 1 angepasst.

Nach einer nicht dargestellten Ausführungsvariante kann das Schnellentlüftungsventil 21 auch im Bereich des Mischblocks 11 an die zentrale Gaszuführung 15 oder im Bereich der Entgratungskammer 1 an die Bohrung 16 z. B. über ein T-Stück angeschlossen sein.

Die zur Steuerung der verschiedenen Ventile 19, 20 und 21 erforderlichen Hydraulikzylinder, Verbindungen, Armaturen und Anschlüsse sind der Übersichtlichkeit halber nicht dargestellt.

In den Figuren 2 bis 5 sind verschiedene Formen und Ausführungsvarianten für das Schnellentlüftungsventil 21.

Die Figur 2 zeigt einen pilzförmigen Ventilstößel 25 und einen zugehörigen Ventilsitz 26. Der Ventilstößel 25 hat abgeschrägte Kontaktflächen 27, die mit entsprechenden Kontaktflächen 28 am Ventilsitz 26 zusammenwirken. Bei dem in Figur 2 dargestellten Ausführungsbeispiel sind die Kontaktflächen 27, 28 schräg ausgebildet, sie können jedoch auch gerade ausgebildet sein, wie in der Figur 3 gezeigt, und z. B. mit abgeschrägten Kanten versehen sein.

Infolge der Pilzform wird der Ventilstößel 25 durch den in Entgratungskammer 1 herrschenden Druck fest auf den zugehörigen Ventilsitz 26 gepresst, ohne dass große Zuhaltekräfte erforderlich sind.

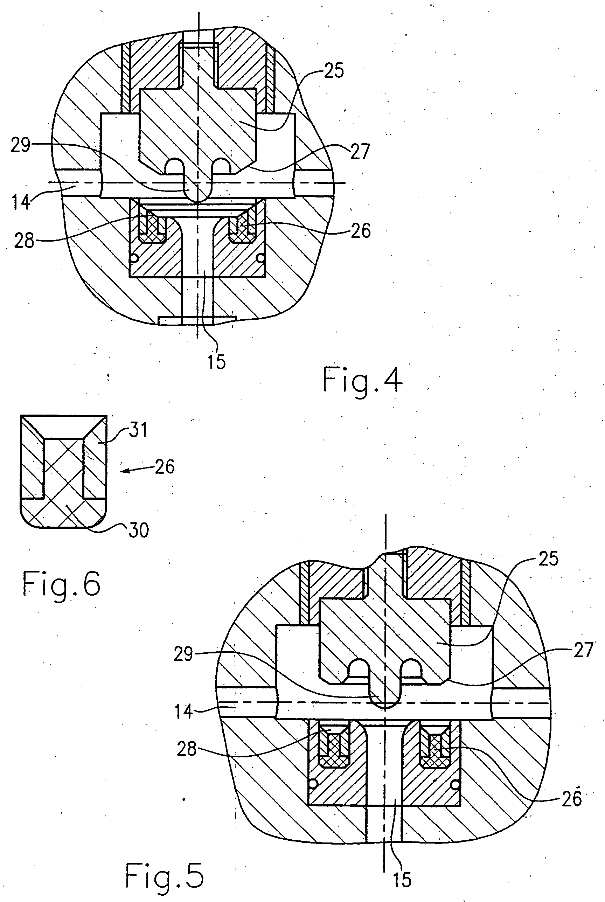

Die Figuren 4 und 5 zeigen Ventilstößel 25, die ebenfalls abgeschrägte oder gerade Kontaktflächen 27 und damit zusammenwirkende abgeschrägte bzw. gerade Kontaktflächen 28 an dem zugehörigen Ventilsitz 26 aufweisen. Außerdem ist an dem Ventilstößel 25 ein mittiger Zapfen 29 angeformt, der mit einer vorzugsweise abgerundeten Spitze versehen ist, jedoch auch beliebige andere Formen annehmen kann. Der Zapfen 29 greift in geschlossenem Zustand in die zentrale Gaszuführung 15 bzw. in das in der zentralen Gaszuführung 15 vorgesehene T-Stück ein und dient als Hitzeschild.

In der Figur 6 ist der erfindungsgemäße Ventilsitz 26 in einer vergrößerten Darstellung gezeigt. Der Ventilsitz 26 besteht aus einem Dichtring 30, der vorzugsweise aus einem elastischen Material, z. B. Teflon besteht. Da der Dichtring 30 allseitig gefasst ist, besteht jedoch auch die Möglichkeit, den Dichtring 30 aus einem plastischen Material herzustellen.

Der Dichtring 30 ist radial innen und außen von geschlossenen, umlaufenden, metallischen Dichtringteilen 31 eingefasst. Diese Dichtringteile 31 sind in Axialrichtung nur über einen Teil der Höhe des Dichtrings 30 geführt, so dass sie bei einer Belastung eine Verdrängerfunktion ausüben und eine Spaltextrusion verhindern können.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Vorrichtung zum thermischen Entgraten von Werkstücken mit einer verschließbaren Entgratungskammer, in welche die zu entgratenden Werkstücke einbringbar sind und die mit einer Prozessgasquelle verbindbar und mit einer Zündeinrichtung zum Zünden einer eingebrachten Prozessgasfüllung versehen ist, **dadurch gekennzeichnet, dass** der Entgratungskammer (1) ein Schnellentlüftungsventil (21) zugeordnet ist, über das der in der Entgratungskammer (1) vorhandene Überdruck abströmen kann.

2. Vorrichtung nach Anspruch 1, **dadurch gekennzeichnet, dass** das Schnellentlüftungsventil (21) direkt an die Entgratungskammer (1) angeschlossen ist.

3. Vorrichtung nach Anspruch 1, **dadurch gekennzeichnet, dass** das Prozessgas aus mehreren Komponenten besteht, die in einem Mischblock (11) zusammengeführt werden und dass das Schnellentlüftungsventil (21) im Bereich des Mischblocks (11) an einer zentralen Gaszuführung (15) für das Prozessgas oder an einer in der Entgratungskammer (1) vorgesehenen Bohrung (16) angeordnet ist.

4. Vorrichtung nach einem der vorhergehenden Ansprüche, **dadurch gekennzeichnet, dass** die zentrale Gaszuführung (15) und/oder die Bohrung (16) über ein T-Stück angezapft sind, an welches das Schnellentlüftungsventil (21) angeschlossen ist.

5. Vorrichtung nach einem der vorhergehenden Ansprüche, **dadurch gekennzeichnet, dass** das Schnellentlüftungsventil (21) vorzugsweise über Hydraulikzylinder ansteuerbar ist.

6. Vorrichtung nach einem der vorhergehenden Ansprüche, **dadurch gekennzeichnet, dass** das Schnellentlüftungsventil (21) einen Ventilstößel (25) umfasst, der auf einen Ventilsitz (26) gepresst wird, der einen aus einem elastischen Material, z. B. Teflon, oder einem plastischen Material bestehenden Dichtring (30) aufweist.

7. Vorrichtung nach Anspruch 6, **dadurch gekennzeichnet, dass** der Ventilsitz (26) ebene oder schräge Kontaktflächen (27) und der Ventilstößel (25) entsprechende Kontaktflächen (28) aufweist.

8. Vorrichtung nach Anspruch 6 oder 7, **dadurch gekennzeichnet, dass** der Dichtring (30) wenigstens auf der vom Ventilstößel (25) beaufschlagten Seite radial innen und außen von geschlossenen, umlaufenden, metallischen Dichtringteilen (31) eingefasst ist.

9. Vorrichtung nach Anspruch 8, **dadurch gekennzeichnet, dass** sich die metallischen Dichtringteile (31) nur über einen Teil der Dichtringhöhe erstrecken.

10. Vorrichtung nach einem der vorhergehenden Ansprüche, **dadurch gekennzeichnet, dass** der Ventilstößel (25) pilzförmig ausgebildet ist.

11. Vorrichtung nach einem der vorhergehenden Ansprüche, **dadurch gekennzeichnet, dass** an das Schnellentlüftungsventil (21) eine Rohrleitung (22) angeschlossen ist, über die der Druck abströmen kann.

12. Vorrichtung nach einem der vorhergehenden Ansprüche, **dadurch gekennzeichnet, dass** der Ventilstößel (25) einen mittig angeordneten zylindrischen Zapfen (29) aufweist, der vorzugsweise nach vorne abgerundet ist.

13. Vorrichtung nach einem der vorhergehenden Ansprüche, **dadurch gekennzeichnet, dass** der Mischblock (11) direkt an der Entgratungskammer (1) angeordnet ist.
